Europäisches Patentamt

European Patent Office

Office européen des brevets

(11) Veröffentlichungsnummer: **0 270 980**
**B1**

(12) **EUROPÄISCHE PATENTSCHRIFT**

(45) Veröffentlichungstag der Patentschrift:
23.05.90

(51) Int. Cl.⁵: **F16F 15/12**, F16D 13/71

(21) Anmeldenummer: **87117736.6**

(22) Anmeldetag: **01.12.87**

(54) **Schwungmassenanordnung.**

(30) Priorität: **06.12.86 DE 3641759**
**19.05.87 DE 3716677**

(43) Veröffentlichungstag der Anmeldung:
**15.06.88 Patentblatt 88/24**

(45) Bekanntmachung des Hinweises auf die Patenterteilung:
**23.05.90 Patentblatt 90/21**

(84) Benannte Vertragsstaaten:
**DE ES FR IT**

(56) Entgegenhaltungen:
**DE-A- 3 412 961**
**DE-A- 3 520 853**
**GB-A- 2 168 780**

(73) Patentinhaber: **VOLKSWAGEN AKTIENGESELLSCHAFT,**
**D-3180 Wolfsburg(DE)**

(72) Erfinder: **Heidemeyer, Paulus, Dipl.-Ing., Südring 7,**
**D-3180 Wolfsburg 13(DE)**
Erfinder: **Scholz, Romanus, Dipl.-Ing., Erlenweg 4,**
**D-3180 Wolfsburg 11(DE)**
Erfinder: **Janz, Winfried, Bärenwinkel,**
**D-3180 Wolfsburg 1(DE)**

**Beschreibung**

Die Erfindung bezieht sich auf eine Schwungmassenanordnung für Hubkolben-Brennkraftmaschinen von Fahrzeugen, insbesondere von Personenkraftfahrzeugen, gemäß dem Oberbegriff des Patentanspruchs 1.

Schwungmassenanordnungen dieser Bauart sind beispielsweise durch die DE-A 3 520 853 und die DE-A 3 412 961 bekannt. Der axiale Bauraum dieser und anderer, ähnlich aufgebauter Schwungmassenanordnungen ist jedoch wegen der Anordnung der Dämpfungseinrichtung in einem besonderen Bauraum zwischen den axial nebeneinanderliegenden Schwungmassen und neben der Reibungskupplung relativ groß. Bei Kraftfahrzeugen, in denen das Antriebsaggregat in Front-Quer-Bauweise angeordnet ist, läßt sich eine derartige Schwungmassenanordnung jedoch wegen der dort besonders engen axialen Bauverhältnisse nicht einsetzen.

Die der Erfindung zugrundeliegende Aufgabe besteht daher darin, eine Schwungmassenanordnung der im Oberbegriff genannten Bauart zu schaffen, die axial wesentlich kürzer baut und dadurch auch für den Einsatz bei Fahrzeugen mit in Front-Quer-Bauweise angeordneten Antriebsaggregaten geeignet ist.

Die Lösung dieser Aufgabe ergibt sich gemäß dem Kennzeichen des Patentanspruchs 1. Erfindungsgemäß werden also das die Verbindung zwischen den Schwungmassen herstellende Übertragungselement und die zwischen dem Übertragungselement und den beiden Schwungmassen angeordneten Dämpfungseinrichtungen radial außerhalb der Reibungskupplung und vorzugsweise unterhalb eines am Außenumfang der ersten Schwungmasse angebrachten Anlasserzahnkranzes angeordnet. Durch diese Bauweise, bei der das Übertragungselement im Gegensatz zu den bisher bekannten Ausführungen von Schwungmassenanordnungen nicht in einer radialen Ebene neben der Reibkupplung und zwischen den beiden Schwungmassen, sondern außerhalb der Reibkupplung in einer im wesentlichen axialen Umfangsebene angeordnet ist, wird in entscheidender Weise axialer Bauraum eingespart.

Weitere zweckmäßige Ausgestaltungen der Erfindung ergeben sich gemäß den Merkmalen der Unteransprüche.

In der Zeichnung ist ein Ausführungsbeispiel der Erfindung in teilweise schematischer Darstellungsweise gezeigt, das im folgenden näher erläutert wird. Die Zeichnung zeigt in

Figur 1 einen Längsschnitt durch eine erste Ausführungsvariante der erfindungsgemäßen Schwungmassenanordnung,

Figur 2 eine Darstellung des Übertragungselements nach der Figur 1 in einer Abwicklung,

Figur 3 einen Längsschnitt durch eine zweite Ausführungsform der erfindungsgemäßen Schwungmassenanordnung und

Figur 4 eine Teilstirnansicht der zweiten Ausführungsform.

In der Zeichnung ist mit 1 die Schwungmassenanordnung insgesamt bezeichnet, die im wesentlichen aus zwei Schwungmassen besteht. Davon ist eine erste Schwungmasse mit 2 bezeichnet, die starr mit einer hier nicht weiter gezeigten Kurbelwelle der Brennkraftmaschine, beispielsweise durch eine Verschraubung mittels Schrauben 18, verbunden ist. Eine zweite Schwungmasse besteht aus einer Schwungscheibe 3 sowie einer gegenüber einem an dieser Schwungscheibe 3 durch eine Verschraubung mittels Schrauben 17 starr befestigten Deckel 5 axial verstellbar gehaltenen Druckplatte 4. Zwischen einander zugewandten Reiblfächen der Schwungscheibe 3 und der Druckplatte 4 ist eine mit Reibbelägen 8 versehene Kupplungsscheibe 7 zur bildung einer Reibkupplung 6 angeordnet. Die Kupplungsscheibe 7 ist unter Verwendung von Nieten 9 an einer auf einer Getriebeeingangswelle 11 drehfest gehaltenen Mitnehmerscheibe 10 befestigt, die Durchgangsöffnungen 10a zum Durchgriff der die erste Schwungmasse 2 an einem Kurbelwellenflansch befestigenden Schrauben 18 aufweist.

Mit 12 ist eine Tellerfeder bezeichnet, die zwischen einer Lagernase 14 des Dekkels 5 und einem auf einem am Deckel 5 befestigten Haltedorn 16 gehaltenen Drahtring 15 schwenkbar gelagert ist. Die Tellerfeder 12 ist dabei so ausgebildet, daß ihr radial äußerer Rand durch Belastung eines Druckringes 13 der Druckplatte 4 die Reibkupplung 6 im Eingriff hält und erst bei axialer Betätigung des radial inneren Randes der in diesem Bereich durch radiale Schlitze zungenartig ausgebildeten Tellerfeder 12 mittels eines hier nicht dargestellten Drucklagers ein Ausrücken der Reibkupplung 6 bewirkt wird. Dazu ist die Druckplatte 4 unter Verwendung von hier nicht weiter gezeigten federnden Halteblechen an dem Deckel 5 befestigt.

Die Schwungscheibe 3 ist mit Hilfe zweier Schrägkugellager 21a und 21b auf einem zylindrischen Ringansatz 20 der ersten Schwungmasse 2 gelagert. Dabei werden die Schrägkugellager 21a und 21b bei der Montage gegeneinander verspannt, indem eine durch die Befestigungsschrauben 18 an der Stirnseite des zylindrischen Ringansatzes 20 festgelegte Ringscheibe 19 mit wählbarer Stärke durch Angriff an einer Ringschulter 23 am Innenumfang des Innenringes des ersten Schrägkugellagers 21a die beiden Kugellager gegen eine am Grund des zylindrischen Ringansatzes 20 angerodnete Tellerfeder 22 drückt. Am Außenumfang der Außenringe der beiden Schrägkugellager sind ebenfalls Ringschultern 24 und 25 vorgesehen, zwischenenen ein radial nach innen ragender Ringbund 26 der Schwungscheibe 3 eingespannt ist. Die bei der Montage aufzubringende Vorspannung soll dabei so gewählt sein, daß sich die Tellerfeder 22 im gespannten Zustand radial ausrichtet, daß also anschließend kein axialer Federweg mehr möglich ist. Dadurch wird erreicht, daß bei Aufbringen der Betätigungskraft zum Ausrücken der Reibkupplung 6 keine Verstellung der Schrägkugellager 21a, 21b erfolgen kann.

Wie aus der Zeichnung weiter ersichtlich ist, sind zwischen den Innenringen und den Außenringen der

beiden Schrägkugellager 21a und 21b O-Ringe vorgesehen und die beiden Schrägkugellager, die zweckmäßigerweise mit einer Dauerfettschmierung versehen sind, weisen jeweils an ihren außen liegenden Stirnseiten Dichtlippen 28 auf, die jeweils an den Außenringen der Lager festgelegt sind und radial auf den Innenringen liegend abdichten sollen.

Die Verbindung zwischen der ersten Schwungmasse 2 und der zweiten, im wesentlichen durch die Schwungscheibe 3 gebildeten Schwungmasse erfolgt bei dem in der Zwichnung gezeigten Aufführungsbeispiel durch einen im wesentlichen axial sich erstreckenden Übertragungsring, der insgesamt mit 30 bezeichnet ist. Dieser Übertragungsring 30 ist in einer Umfangsebene radial außerhalb des Außenumfanges der Reibkupplung 6 angeordnet und jeweils durch eine Dämpfungsvorrichtung 31 bzw. 32 mit der ersten Schwungmasse 2 bzw. der zweiten Schwungmasse 3, 4, 5 verbunden. Die Dämpfungsvorrichtungen 31 und 32 bestehen jeweils aus Feder- bzw. Reibungsvorrichtungen, die bei unterschiedlichen Belastungszuständen zur Wirkung kommen.

Der zylindrische Übertragungsring 30 weist dazu an seinen beiden Stirnseiten angeordnete, sich im wesentlichen in axialer Richtung erstreckende Ringansätze 38 und 41 auf, die in umlaufende Axialschlitze 37 und 40 der ersten Schwungmasse 2 bzw. der Schwungscheibe 3 eingreifen. Dabei soll der Eingriff des axialen Ringansatzes 38 in den Axialschlitz 37 der ersten Schwungmasse so erfolgen, daß zwischen beiden ein Reibkontakt hergestellt wird. Dies kann beispielsweise dadurch erreicht werden, daß für den zylindrischen Ringansatz 38 einerseits und den zylindrischen Axialschlitz 37 andererseits solche Passungspaarungen gewählt werden, daß sich ein Reibsitz ergibt.

Der Reibkontakt kann aber auch dadurch erreicht werden, daß beispielsweise am Innenumfang des axialen Ringansatzes 38 eine Welligkeit mit gleichmäßig über den Umfang verteilten Wellentälern und Wellenbergen vorgesehen ist, wodurch ebenfalls ein Reibsitz des axialen Ringansatzes in dem Axialschlitz der ersten Schwungmasse 2 erzielt wird. Schließlich ist es auch möglich, am Innenumfang des axialen Ringansatzes 38 durchgehend oder auch eventuell nur in gleichmäßig über den Umfang verteilten einzelnen Sektoren Reibbeläge 39 vorzusehen, die dann gegenüber der am Axialschlitz 37 der ersten Schwungmasse 2 angeordneten Gegenfläche einen Reibsitz mit definierten Reibwerten bildet.

Die Reibvorrichtung zwischen dem Übertragungsring 30 und der Schwungscheibe 3 der zweiten Schwungmasse wird dadurch erreicht, daß an dem Übertragungsring ein radial nach innen ragender Ringsteg 42 mit einer konischen Innenkontur 43 vorgesehen ist, der von einer Tellerfeder 45 axial gegen eine am Außenumfang der Schwungscheibe 3 vorgesehene, ebenfalls konische Gegenfläche 44 gedrückt wird. Dabei ist die Vorspannung der Tellerfeder 45 vorzugsweise einstellbar, indem ein den Außenrand der Tellerfeder 5 an einer Ringschulter 46 abstützender Haltering 47 am Außenumfang der Schwungscheibe 3 einstellbar befestigt ist. Beispielsweise kann diese einstellbare Befestigung des Halteringes an der Schwungscheibe mit Hilfe eines Gewindes oder eines Bajonettverschlusses erfolgen. In der Zeichnung wird der Halterig 47 durch radiale Spannstifte 48 deren Bohrungen in Einbaulage hergestellt werden, am Außenumfang der Schwungscheibe 3 festgelegt.

Die konische Ausbildung der Reibflächen zwischen dem Übertragungsring 30 und der Schwungscheibe 3 ergibt eine vorteilhafte Steigerung des Reibmoments bei begrenzt aufzubringender Federkraft der Tellerfeder 45.

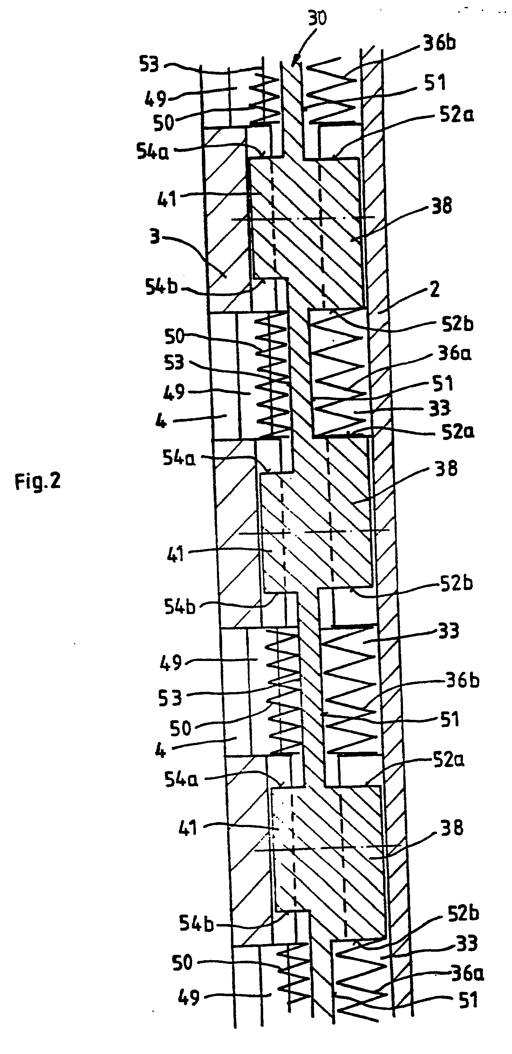

Neben den Reibvorrichtungen weisen die Dämpfungsvorrichtungen 31 und 32 auch noch Federvorrichtungen auf, die eine begrenzte Verdrehbarkeit der Schwungmassen gegeneinander ermöglichen. Dazu sind am Außenumfang der Schwungmassen Ausnehmungen 33 und 49 vorgesehen, in denen die Federn 36 und 50 mit in Umfangsrichtung verlaufenden Wirkungsrichtungen gehalten sind. Gleichzeitig weist der Übertragungsring 30 an beiden Stirnseiten im Bereich der Federn 36und 50 Ausnehmungen 51 bzw. 53 auf, die mit ihren seitlichen Begrenzungswänden 52a und 52b bzw. 54a und 54b Anschläge zur Beaufschlagung der Federn 36 und 50 in den einzelnen Belastungsstufen bilden (Figur 2). Die Federn 36 und 50 sind dabei jeweils als Schraubenfedern ausgebildet, wobei zwischen der ersten Schwungmasse 2 und dem Übertragungsring 30 in den Aussparungen 33 der Schwungmasse 2 gleichmäßig über den Umfang verteilt und jeweils abwechselnd Federn 36a, die bereits im Leerlauf der Brennkraftmaschine ansprechen, und Federn 36b, die erst bei Motorvollast und vergrößerten Verdrehwinkeln durch Anschlag der Seitenwände 52a bzw. 52b des Übertragungsringes 30 ansprechen, angeordnet sind. Von den zwischen dem Übertragungsring 30 und der Schwungscheibe 3 angeordneten Federn 50 sind bei dem hier gezeigten Ausführungsbeispiel insgesamt sechs gleichmäßig über den Umfang verteilt vorgesehen, die erst bei großen Verdrehwinkeln durch Anschlag der Seitenwände 54a bzw. 54b der Ausnehmungen 53 des Übertragungsringes 30 ansprechen.

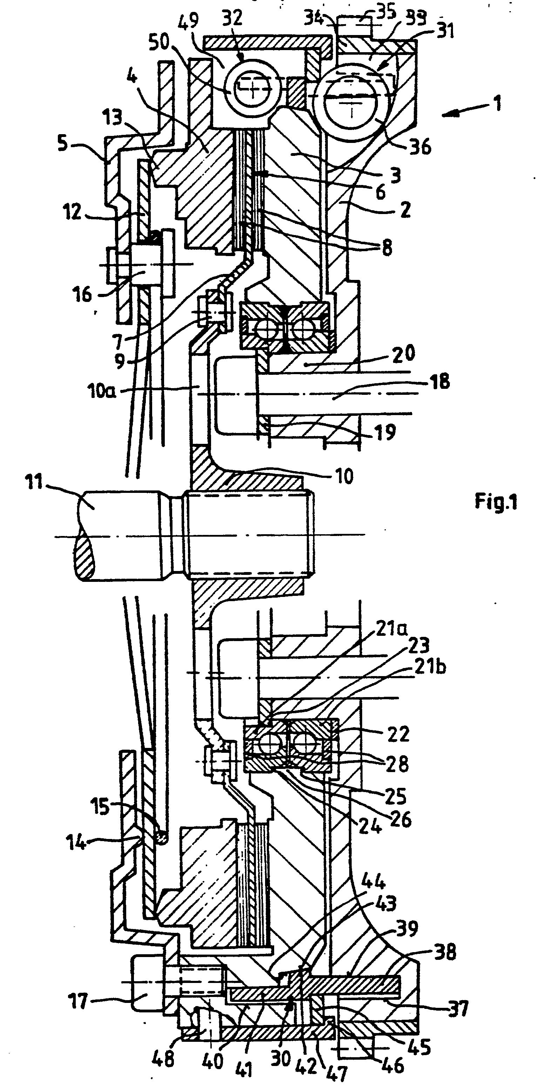

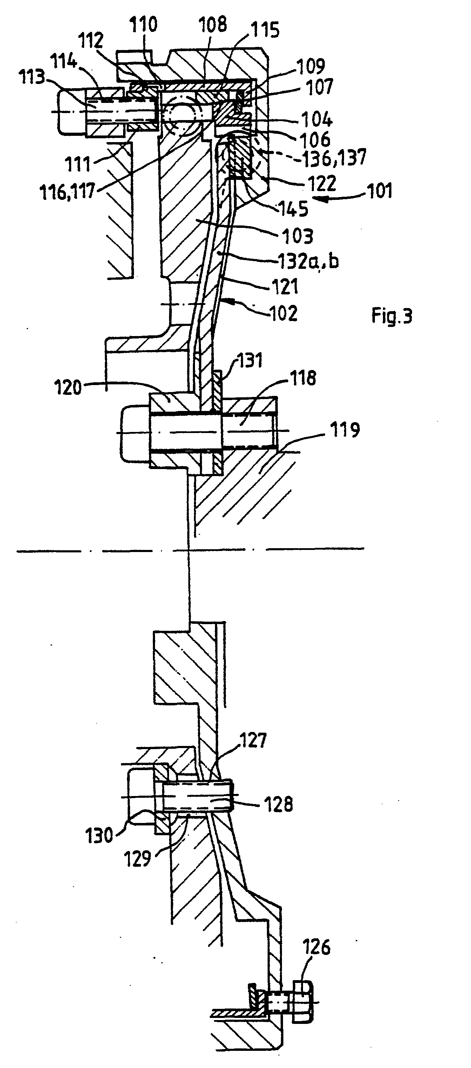

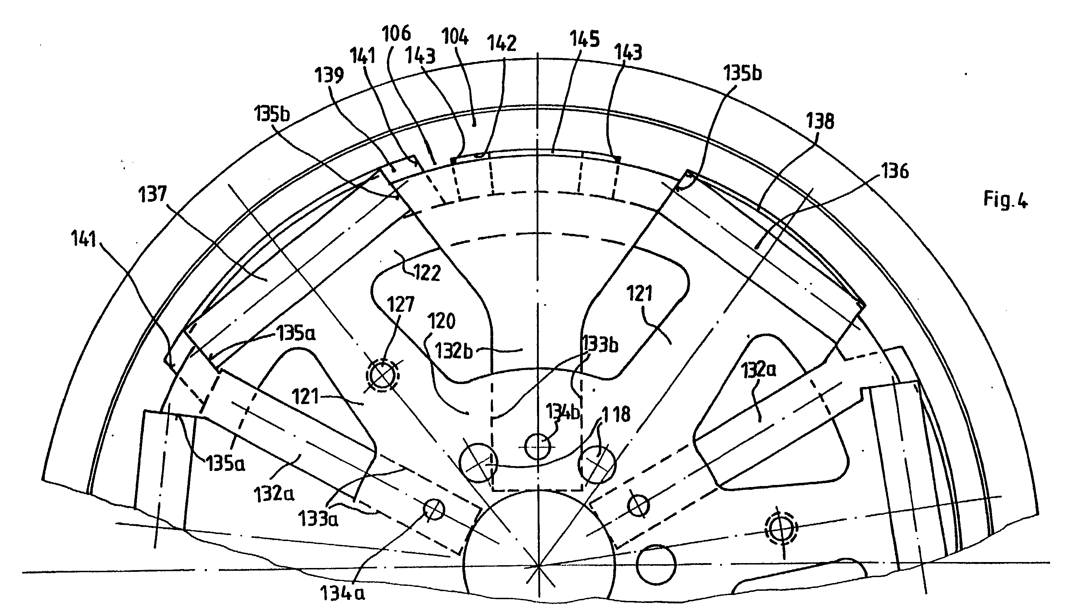

In den Figuren 3 und 4 der Zeichnung ist eine zweite, bezüglich einiger Merkmale besonders zweckmäßige Ausführungsform der Erfindung gezeigt. In der Figur 3 ist dabei nur ein Teil der gesamten Schwungmassenanordnung dargestellt: es ist aber klar, daß die hier nicht gezeigten Teile durchaus der Ausführung nach der Figur 1 entnommen werden können.

Wesentlich bei der Ausführung nach den Figuren 3 und 4 ist zunächst, daß das Schwungrad 102 als gespeichte Ausführung ausgebildet ist, indem die Verbindung zwischen einer Schwungradnabe 120 und einem den wesentlichen Anteil des Schwungmomentes ausmachenden Radkranz 122 durch mehrere über den Umfang verteilt angeordnete Speichen 121 hergestellt wird. Die in Umfangsrichtung liegenden Kanten dieser Speichen 121 können dabei, beispielsweise durch Anschrägung oder Anstellung, schaufelförmig ausgebildet sein, so daß sie zur intensiven Förderung von Kühlluft zur zweiten Schwungmasse 103 herangezogen werden können.

In dem Raum zwischen den gleichmäßig über den Umfang verteilten Speichen 121 sind blattförmige, sich im wesentlichen radial erstreckende Halteelemente 132a, 132b angeordnet. Diese blattförmigen Halteelemente, von denen, wie aus der Figur 4 ersichtlich ist, zwei verschiedene Ausführungsformen, nämlich eine schmalere Form 132a und eine etwas breitere Ausführungsform 132b vorgesehen sind, dienen dabei mehreren verschiedenen Aufgaben. Die Halteelemente werden mit ihren radial inneren Enden in radialen Nuten 133a, 133b der Nabe 120 des Schwungrades 102 gehalten, und zwar derart, daß sie, wie aus der Figur 3 ersichtlich ist, bei der Befestigung des Schwungrades 102 an dem Befestigungsflansch 119 der Kurbelwelle mittels einer Befestigungsschraube 118 zwischen der Nabe 120 des Schwungrades 102 und einer Spannscheibe 131 axial eingespannt werden. Paßstifte 134a und 134b übernehmen die zusätzliche Sicherung und Lagefixierung der Halteelemente 132a, 132b. Die radial äußeren Enden der Halteelemente 132a, 132b dienen zunächst als Anschläge 135a bzw. 135b für die zwischen dem zylindrischen Ring 104 und dem Schwungrad 102 angeordneten Federvorrichtungen 136, 137, die ebenso wie bei der Ausführung nach der Figur 1 als Druckfedern ausgebildet sind und in entsprechenden Aussparungen 138, 139 des Radkranzes 122 bzw. eines an dem schwungradseitigen Ende des zylindrischen Ringes 104 vorgesehenen radial nach innen gerichteten Steges 106 angeordnet sind. Dabei sind die Federn 136 ohne wesentliches Spiel in Ausnehmungen 138 des radialen Steges 106 des zylindrischen Ringes 104 gehalten, während die Federn 137 in den ihnen zugeordneten Ausnehmungen 139 an dem radialen Steg 106 des zylindrischen Ringes 104 mit einem Umfangsspiel gehalten sind, so daß sie erst nach einer größeren relativen Verdrehung des Schwungrades 102 gegenüber dem zylindrischen Ring 104 an Anschlägen 141 des Ringsteges 106 zur Anlage und somit zur Wirkung kommen. die Federn 136 und 137 entsprechen dabei den Federn 36a und 36b bei der Ausführung nach den Figuren 1 und 2. Die Federn 136 sprechen also bereits beim Leerlauf der Brennkraftmaschine an, während die Federn 137 erst bei Motorvollast und vergrößerten Verdrehwinkeln zum Ansprechen kommen.

Die Halteelemente 132a, 132b bewirken dabei eine gleichmäßige Belastung der als Schraubenfedern ausgebildeten Federn 136, 137 an wenigstens zwei gegenüberliegenden Umfangspunkten, wobei ein Umfangspunkt von einer Ausnehmungskante des Radkranzes 122 und der andere von der Anschlagkante des entsprechenden Halteelementes beaufschlagt wird.

Ein Teil der Halteelemente, nämlich die mit 132b bezeichneten breiteren Ausführungsformen dienen darüberhinaus noch zur axialen Beaufschlagung von plattenförmigen Reibelementen 145, die in Ausnehmungen 142 des radialen Steges 106 des zylindrischen Ringes 104 gehalten und gegen die Innenkontur des Radkranzes 122 des Schwungrades 102 gedrückt werden. Die Reibelemente 145 sind dabei mit Spiel in den Ausnehmungen 142 gehalten, so daß erst bei einer relativen Verdrehung des zylindrischen Ringes 104 gegenüber dem Schwungrad 102 nach Anlage der Anschlagkanten 143 an dem Reibelement 145 die dämpfende Reibungswirkung zwischen dem zylindrischen Ring 104 und dem Schwungrad 102 zum Tragen kommt.

Bei dem in der Figur 3 gezeigten Ausführungsbeispiel kommt somit der zylindrische, als Übertragungselement dienende Ring 104 nicht unmittelbar an dem Schwungrad 102 zur reibenden Anlage, sondern erst unter Vermittlung des Reibelementes 145. Auch an der als Druckplatte ausgeführten zweiten Schwungmasse 103 kommt der zylindrische Ring 104 nicht unmittelbar zur Reibanlage. dies erfolgt vielmehr unter Zwischenschaltung eines Reibringes 115, der beispielsweise über klauenförmige Mitnehmer drehfest mit dem Außenkranz der Schwungmasse 103 verbunden ist. Zwischen dem Reibring 115 und dem zylindrischen Ring 104 ist eine aus den Reibflächen 116, 117 gebildete konische Reibflächenanordnung vorgesehen. Der zylindrische Ring 104 wird dabei von einer Tellerfeder 107 in ständigem Reibeingriff mit dem Reibring 115 gehalten. Die Tellerfeder 107 stützt sich dazu an einer Haltenase 109 des Halteringes 108 ab, der verstellbar gegenüber der zweiten Schwungmasse 103 gehalten ist. Diese Verstellung bzw. Nachstellung kann hier z.B in der Weise erfolgen, daß mehrere über den Umfang vorgesehene Spannschrauben 113 vorgesehen sind, die durch Bohrungen 114 der zweiten Schwungmasse 103 greifen und jeweils eine in einer Ausnehmung der Schwungmasse angeordnete Spannmutter 111 verstellen, die mit einer Haltenase 112 in eine Ausnehmung 110 des Halteringes 108 greift. Durch Verdrehung der Spannschraube 113 und Anziehen bzw. Lockern der Spannmutter 111 kann dabei die Kraftbeaufschlagung der Tellerfeder 107 und damit auch das Reibmoment an den Reibflächen 116, 117 verändert werden.

In der Figur 3 sind noch zwei weitere, der Montage der gesamten Einheit dienende Vorrichtungen angedeutet. Zunächst sind am Außenumfang des Radkranzes 122 des Schwungrades 102 eine oder mehrere gleichmäßig über den Umfang verteilte Gewindebohrungen vorgesehen, die zur Aufnahme von Montagespannschrauben 126 dienen, die bei der Montage den Haltering 108 zur Kraftbeaufschlagung der Tellerfeder 107 vorspannen, jedenfalls so lange, bis die aus Spannschrauben 113 und Spannmuttern 111 bestehende Spanneinheit montiert ist. Nach der Montage dieser Spanneinheit können die Montagespannschrauben 126 entfernt werden.

Darüberhinaus ist noch eine Halteschraube 128 angedeutet, die in eine im Bereich der Speichen 121 des Schwungrades 102 angebrachte Gewindebohrung 127 einschraubbar ist und zwar durch eine Belüftungsöffnung 129 der zweiten Schwungmasse 103 hindurch. 130 bezeichnet noch einen Haltering zwischen dem Kopf der Halteschraube 128 und der zweiten Schwungmasse 103. Mit Hilfe dieser zweckmäßigerweise ebenfalls gleichmäßig über den Umfang verteilten Anordnung können nun das die erste Schwungmasse bildende Schwungrad 102, die Halteelemente 132, die durch die Druckplatte gebildete zweite Schwungmasse 103 sowie der als Übertragungselement zwischen den beiden Schwungmas-

sen vorgesehene zylindrische Ring 104 mit den Feder- und Dämpfungselementen zu einer gemeinsam an der Kurbelwelle montierbaren Einheit zusammengehalten werden, so daß die Montage wesentlich erleichtert wird. Der wesentliche Vorteil der in den Figuren 3 und 4 gezeigten Ausführung besteht aber in einer nochmaligen axialen Kürzung der Schwungmassenanordnung, indem in dem Raum für die erste Schwungmasse zugleich auch die Halteelemente untergebracht werden, die einerseits zur raumsparenden Halterung der Schraubenfedern und andererseits zur Druckbeaufschlagung der Reibelemente herangezogen werden können. Durch die gespeichte Ausführung der ersten Schwungmasse wird dabei der Raum für die Halteelemente geschaffen, gleichzeitig das Gewicht der Schwungmassenanordnung reduziert und eine Möglichkeit zur Förderung von Kühlluft an die thermisch höher beaufschlagten Teile der Schwungmassenanordnung, nämlich an die zweite Schwungmasse, bereitgestellt.

Zusammenfassend ist festzustellen, daß die in den Figuren der Zeichnung dargestellte und beschriebene Schwungmassenanordnung trotz ihrer Ausbildung als Mehrmassenanordnung axial so kurz baut, daß sie auch bei Front-Quer-Anordnungen von Antriebsaggregaten in Personenkraftfahrzeugen ohne größere Schwierigkeiten eingesetzt werden kann. Die Kupplungsscheibe und die damit verbundene, auf der Getriebeeingangswelle gehaltene Mitnehmerscheibe ist im übrigen ohne Dämpfungseinrichtungen ausgeführt, wodurch die zu beschleunigenden Drehmassen im Getriebe verringert und dabei die Synchronisierung bei Schaltvorgängen des Getriebes erleichtert wird.

**Patentansprüche**

1. Schwungmassenanordnung (1) für Hubkolben-Brennkraftmaschinen von Fahrzeugen, insbesondere von Personenkraftfahrzeugen, mit wenigstens zwei koaxial zueinander und axial nebeneinander angeordneten Schwungmassen (2, 3, 4, 5), von denen eine erste (2) starr mit einer Kurbelwelle der Brennkraftmaschine, eine zweite (3, 4, 5) über eine Reibkupplung (6) mit einer Eingangswelle eines der Brennkraftmaschine nachgeschalteten Getriebes und beide Schwungmassen jeweils unter Zwischenschaltung einer aus Feder- und Reibvorrichtungen bestehenden Dämpfungseinrichtung (31, 32) mit einem die Schwungmassen unter Gewährung einer begrenzten Verdrehbarkeit gegeneinander koppelnden Übertragungselement (30) verbunden sind, dadurch gekennzeichnet, daß das Übertragungselement (30) und die Dämpfungseinrichtungen (31, 32) in im wesentlichen radial außerhalb der Reibungskupplung (6) liegenden Umfangsebenen angeordnet sind.

2. Schwungmassenanordnung nach Anspruch 1, dadurch gekennzeichnet, daß das Übertragungselement aus einem zylindrischen Ring (30) gebildet ist mit an beiden Stirnseiten angeordneten, sich im wesentlichen in axialer Richtung erstreckenden Ringansätzen (38, 41), die in umlaufende Axialschlitze (37, 40) der ersten (2) und der zweiten Schwungmasse (3) eingreifen.

3. Schwungmassenanordnung nach Anspruch 1 oder 2, dadurch gekennzeichnet, daß beide Schwungmassen (2, 3) in ihren radial äußeren Bereichen Aussparungen (33, 49) zur Aufnahme der in Umfangsrichtung wirksamen Federvorrichtungen (36a, 36b, 50) der Dämpfungseinrichtungen (31, 32) aufweisen.

4. Schwungmassenanordnung nach Anspruch 2 oder 3, dadurch gekennzeichnet, daß der zylindrische Ring (30) an beiden Stirnseiten Anschläge (52a, 52b, 54a, 54b) für die Federvorrichtungen (36a, 36b, 50) bildende Ausnehmungen (51, 53) aufweist.

5. Schwungmassenanordnung nach einem der Ansprüche 2 bis 4, dadurch gekennzeichnet, daß der in den Axialschlitz (37) der ersten Schwungmasse (2) eingreifende axiale Ringansatz (38) des zylindrischen Ringes (30) in einer eine Reibvorrichtung gegenüber der ersten Schwungmasse (2) bildenden Weise gehalten ist.

6. Schwungmassenanordnung nach Anspruch 5, dadurch gekennzeichnet, daß der axiale Ringansatz (38) wenigstens eine an einer Gegenfläche der ersten Schwungmasse zur Reibanlage kommende Reibfläche (39) aufweist.

7. Schwungmassenanordnung nach Anspruch 6, dadurch gekennzeichnet, daß die Reibfläche (39) zumindest auf einem Teil ihres Umfanges Reibbeläge aufweist.

8. Schwungmassenanordnung nach Anspruch 6, dadurch gekennzeichnet, daß die Reibfläche (39) und die zugeordnete Gegenfläche eine einen Reibsitz bewirkende Passungspaarung aufweisen.

9. Schwungmassenanordnung nach Anspruch 6, dadurch gekennzeichnet, daß die Reibfläche (39) eine über den Umfang gleichmäßig verteilte Welligkeit aufweist.

10. Schwungmassenanordnung nach Anspruch 2, dadurch gekennzeichnet, daß der zylindrische Ring (30) eine von einer vorgespannten Tellerfeder (45) gegen eine mit der zweiten Schwungmasse (3) verbundene konische Gegenfläche (44) drückbare konische Reiblfläche (43) aufweist.

11. Schwungmassenanordnung nach Anspruch 10, dadurch gekennzeichnet, daß die Vorspannung der Tellerfeder (45) einstellbar ist.

12. Schwungmassenanordnung nach Anspruch 10 oder 11, dadurch gekennzeichnet, daß die Tellerfeder (45) auf einer Ringschulter (46) eines an der zweiten Schwungmasse (3) einstellbar befestigten Halteringes (47) abgestützt ist.

13. Schwungmassenanordnung nach einem der Ansprüche 1 bis 12, dadurch gekennzeichnet, daß die zweite Schwungmasse (3) mittels zweier unter Verwendung einer Tellerfeder (22) gegeneinander verspannter Schrägkugellager (21a, 21b) auf einem zylindrischen Ringansatz (20) der ersten Schwungmasse (2) gelagert ist.

14. Schwungmassenanordnung nach Anspruch 13, dadurch gekennzeichnet, daß die Außenringe der bei den Schrägkugellager (21a, 21b) einander zugewandte Ringschultern (24, 25) aufweisen, zwischen denen ein radial nach innen ragender Ringbund (26) der zweiten Schwungmasse (3) gehalten ist.

15. Schwungmassenanordnung nach Anspruch 13 oder 14, dadurch gekennzeichnet, daß die Innenringe der Schrägkugellager (21a, 21b) mit einer Kraft gegen die im Grund des Ringansatzes (20) gehaltene Tellerfeder (22) gespannt sind, die größer ist, als die Betätigungskraft der Reibkupplung (6).

16. Schwungmassenanordnung nach Anspruch 15, dadurch gekennzeichnet, daß die Innenringe der Schrägkugellager (21a, 21b) mit einer solchen Kraft gegen die im Grund des Ringansatzes (20) gehaltene Tellerfeder (22) gespannt sind, daß die Tellerfeder im vorgespannten Zustand im wesentlichen radial ausgerichtet ist.

17. Schwungmassenanordnung nach Anspruch 13, dadurch gekennzeichnet, daß die Tellerfeder zwischen den Außenringen der Schrägkugellager angeordnet und im eingebauten Zustand im wesentlichen auf Blockhöhe gedrückt ist.

18. Schwungmassenanordnung nach einem der Ansprüche 1 bis 17, dadurch gekennzeichnet, daß die erste Schwungmasse als im wesentlichen aus einer Nabe (120), einem ringscheibenförmigen Radkranz (122) und die Nabe mit dem Radkranz verbindenden, über den Umfang verteilten Speichen (121) bestehendes Schwungrad (102) ausgebildet ist.

19. Schwungmassenanordnung nach Anspruch 18, dadurch gekennzeichnet, daß zumindest die in Umfangsrichtung liegenden Kanten der Speichen (121) schaufelförmig ausgebildet sind.

20. Schwungmassenanordnung nach Anspruch 18 oder 19, dadurch gekennzeichnet, daß im Bereich zwischen den Speichen (121) blattförmige, sich im wesentlichen radial erstreckende Halteelemente (132a, 132b) angeordnet sind, deren radial innere Enden im Bereich der Nabe (120) des Schwungrades (102) gehalten sind und deren radial äußere Enden als Anschläge (135a, 135b) für die zwischen dem zylindrischen Ring (104) und dem Schwungrad (102) angeordneten Federvorrichtungen (136, 136) ausgebildet sind.

21. Schwungmassenanordnung nach einem der Ansprüche 18 bis 20, dadurch gekennzeichnet, daß die radial inneren Enden der Halteelemente (132a, 132b) in radialen Nuten (133a, 133b) der Schwungradnabe (120) gehalten und durch Paßstifte (134a, 134b) gesichert sind.

22. Schwungmassenanordnung nach Anspruch 20 oder 21, dadurch gekennzeichnet, daß die Halteelemente (132b) wenigstens teilweise als Federelemente zur axialen Beaufschlagung von an dem Radkranz (122) des Schwungrades (102) zur Reibanlage kommenden Reibelementen (145) ausgebildet sind.

23. Schwungmassenanordnung nach Anspruch 22, dadurch gekennzeichnet, daß die Reibelemente (145) durch zwischen dem Schwungrad (102) und den Halteelementen (132b) angeordnete und in Ausnehmungen (142) eines radial gerichteten Steges (106) des zylindrischen Ringes (104) gehaltene, plattenförmige Bauteile gebildet sind.

24. Schwungmassenanordnung nach einem der Ansprüche 1 bis 23, dadurch gekennzeichnet, daß die konische Reiblfläche (116) des zylindrischen Ringes (104) mit einer konischen Gegenfläche (117) an einem mit der zweiten Schwungmasse (103) drehfest verbundenen Reibring (115) zusammenwirkt.

25. Schwungmassenanordnung nach einem der Ansprüche 1 bis 24, dadurch gekennzeichnet, daß zur einstellbaren Befestigung des Halteringes (108) an der zweiten Schwungmasse (103) von jeweils einer an der Schwungmasse gehaltenen Spannschraube (113) verstellbare, in Ausnehmungen (110) des Halternges (108) greifende Spannmuttern (110) vorgesehen sind.

26. Schwungmassenanordnung einem der Ansprüche 1 bis 25, dadurch gekennzeichnet, daß am Außenumfang des Schwungrades Montage-Spannschrauben (126) zur vorübergehenden Druckbeaufschlagung der Tellerfedern (107) während des Montagevorganges befestigbar sind.

27. Schwungmassenanordnung nach einem der Ansprüche 1 bis 26, dadurch gekennzeichnet, daß an den Speichen (121) des Schwungrades (102) Gewindebohrungen (127) zum Eingriff von durch Lüftungsbohrungen (129) der zweiten Schwungmasse (103) greifenden Halteschrauben (128) zwecks Bildung einer vormontierbaren Baueinheit vorgesehen sind.

## Claims

1. A centrifugal mass arrangement (1) for reciprocating piston internal combustion engines of vehicles, particularly passenger vehicles, having at least two centrifugal masses (2, 3, 4, 5) disposed coaxially to one another and axially adjacent one another, a first (2) of which centrifugal masses is rigidly connected to a crankshaft of the internal combustion engine, a second (3, 4, 5) of which is connected by way of a friction clutch (6) to an input shaft (11) of a transmission connected to the output side of the internal combustion engine, and the two centrifugal masses are each connected by way of a respective interposed damping device (31, 32), comprising spring- and friction devices, to a transmission element (30) coupling the centrifugal masses and allowing limited rotatability of the centrifugal masses relative to one another, characterised in that the transmission element (30) and the damping devices (31, 32) are disposed in circumferential planes lying substantiallly radially outside the friction clutch (6).

2. A centrifugal mass arrangement as claimed in claim 1, characterised in that the transmission element is formed from a cylindrical ring (30) having ring extensions (38, 41) disposed on both end faces and extending substantially in an axial direction and engaging continuous axial slots (37, 40) of the first (2) and the second (3) centrifugal mass.

3. A centrifugal mass arrangement as claimed in claim 1 or 2, characterised in that the two centrifugal masses (2, 3) have recess (33, 49) in their radially outer regions for receiving the spring devices (36a, 36b, 50), effective in the circumferential direction, of the damping devices (31, 32).

4. A centrifugal mass arrangement as claimed in claim 2 or 3, characterised in that the both end faces of the cylindrical ring (30) have recesses (51, 53) forming stops (52a, 52b, 54a, 54b) for the spring devices (36a, 36b, 50)

5. A centrifugal mass arrangement as claimed in one of the claims 2 to 4, characterised in that the axial ring extension (38) of the cylindrical ring (30) engaging the axial slot (37) of the first centrifugal mass (2) is held in a manner forming a friction device with respect to the first centrifugal mass (2).

6. A centrifugal mass arrangement as claimed in claim 5, characterised in that the axial ring extension (38) has at least one friction surface (39) coming into frictional abutment against a counter-surface of the first centrifugal mass.

7. A centrifugal mass arrangement as claimed in claim 6, characterised in that the friction surface (39) has friction linings at least on a part of its circumference.

8. A centrifugal mass arrangement as claimed in claim 6, characterised in that the friction surface (39) and the associated counter-surface have a close tolerance fit effecting a friction fit.

9. A centrifugal mass arrangement as claimed in 6, characterised in that the friction surface (39) has corrugations uniformly distributed around the periphery.

10. A centrifugal mass arrangement as claimed in claim 2, characterised in that the cylindrical ring (30) has a conical friction surface (43) which is pressable by an initially stressed cup spring (45) against a conical counter-surface (44) connected to the second centrifugal mass (3).

11. A centrifugal mass arrangement as claimed in claim 10, characterised in that the initial stress of the cup spring (45) is adjustable.

12. A centrifugal mass arrangement as claimed in claim 10 or 11, characterised in that the cup spring (45) is supported on an annular shoulder (46) of a retaining ring (47) adjustably secured to the second centrifugal mass (3).

13. A centrifugal mass arrangement as claimed in one of the claims 1 to 12, characterised in that the second centrifugal mass (3) is mounted on a cylindrical annular extension (20) of the first centrifugal mass (2) by means of two angular ball bearings (21a, 21b) clamped against one another by the use of a cup spring (22).

14. A centrifugal mass arrangement as claimed in claim 13, characterised in that the outer races of the two angular ball bearings (21a, 21b) have mutually facing annular shoulders (24, 25) between which a radially inwardly projecting annular colar (26) of the second centrifugal mass (3) is held.

15. A centrifugal mass arrangement as claimed in claim 13 or 14, characterised in that the inner races of the angular ball bearings (21a, 21b) are clamped against the cup spring (22), held in the base of the annular extension (20), by a force which is larger than the actuating force of the friction clutch (6).

16. A centrifugal mass arrangement as claimed in claim 15, characterised in that the inner races of the angular ball bearings (21a, 21b) are clamped against the cup spring (22), held in the base of the annular extension (20), by such a force that the cup spring is aligned substantially radially when in its initially stressed state.

17. A centrifugal mass arrangement as claimed in claim 13, characterised in that the cup spring is disposed between the outer races of the angular ball bearings and is substantially fully compressed when in the fitted state.

18. A centrifugal mass arrangement as claimed in one of the claims 1 to 17, characterised in that the first centrifugal mass is in the form of a flywheel (102) chiefly comprising a hub (120), a circular-disc-shaped wheel rim (122) and spokes (121) which are distributed around the circumference and which connect the hub to the wheel rim.

19. A centrifugal mass arrangement as claimed in claim 18, characterised in that at least those edges of the spokes (121) which lie in the circumferential direction are vane-shaped.

20. A centrifugal mass arrangement as claimed in claim 18 or 19, characterised in that lamellar retaining elements (132a, 132b) extending substantially radially are disposed in the region between the spokes (121), the radially inner ends of which retaining elements are held in the region of the hub (120) of the flywheel (102) and their radially outer ends are formed as stops (135a, 135b) for the spring devices (136, 136) disposed between the cylindrical ring (104) and the flywheel (102).

21. A centrifugal mass arrangement as claimed in one of the claims 18 to 20, characterised in that the radially inner ends of the retaining elements (132a, 132b) are held in radial grooves (133a, 133b) of the flywheel hub (120) and are secured by dowel pins (134a, 134b).

22. A centrifugal mass arrangement as claimed in claim 20 or 21, characterised in that the retaining elements (132b) are formed at least partially as spring elements for acting axially upon friction elements (145) coming into frictional abutment against the wheel rim (122) of the flywheel (102).

23. A centrifugal mass arrangement as claimed in claim 22, characterised in that the friction elements (145) are formed by plate-shaped components which are disposed between the flywheel (102) and the retaining elements (132b) and held in recesses (142) in a radially directed web (106) of the cylindrical ring (104).

24. A centrifugal mass arrangement as claimed in one of the claims 1 to 23, characterised in that the conical friction surface (116) of the cylindrical ring (104) cooperates with a conical counter-surface (117) on a friction ring (115) connected to the second centrifugal mass (103) so as to be non-rotational relative thereto.

25. A centrifugal mass arrangement as claimed in one of the claims 1 to 24, characterised in that, for the purpose of adjustably securing the retaining ring (108) to the second centrifugal mass (103), there are provided clamping nuts (110) which are adjustable by respective clamping screws (113) held in the centrifugal mass and which engage recesses (110) in the retaining ring (108).

26. A centrifugal mass arrangement as claimed in one of the claims 1 to 25, characterised in that assembly clamping screws (126) for temporarily applying pressure to the cup springs (107) during the assembly operation are securable to the outer circumference of the flywheel.

27. A centrifugal mass arrangement as claimed in one of the claims 1 to 26, characterised in that screw-threaded bores (129) for the engagement of retaining screws (128) passing through ventilating bores (129) of the second centrifugal mass (103) are provided in the spokes (121) of the flywheel (102) for the purpose of forming a pre-assemblable structural unit.

**Revendications**

1. Agencement de masses d'inertie (1) pour moteurs alternatifs à combustion interne de véhicules automobiles, en particulier de voitures de tourisme, comportant au moins deux masses d'inertie (2, 3, 4, 5) coaxiales entre elles et juxtaposées axialement, dont une première masse d'inertie (2) est reliée de manière rigide à un vilebrequin du moteur à combustion interne, une deuxième masse d'inertie (3, 4, 5) est reliée par un embrayage à friction (6) à un arbre d'entrée d'une transmission montée en aval du moteur à combustion interne, et ces deux masses d'inertie sont reliées, par interposition pour chacune d'un dispositif d'amortissement (31, 32) constitué de dispositifs à ressort et de friction, à un élément de transmission (30) accouplant les masses d'inertie en leur conférant une possibilité de rotation limitée l'une par rapport à l'autre, caractérisé en ce que l'élément de transmission (30) et les dispositifs d'amortissement (31, 32) sont disposés dans des plans périphériques situés à près radialement à l'extérieur de l'embrayage à friction (6).

2. Agencement de masses d'inertie selon la revendication 1, caractérisé en ce que l'élément de transmission est formé par un anneau cylindrique (30) avec des talons d'anneau (38, 41) disposés sur les deux faces frontales et s'étendant à peu près axialement, qui s'engagent dans des fentes axiales périphériques (37, 40) de la première (2) et de la deuxième masse d'inertie (3).

3. Agencement de masses d'inertie selon la revendication 1 ou 2, caractérisé en ce que les deux masses d'inertie (2, 3) présentent, dans leurs zones radialement extérieures, des évidements (33, 49) destinés à recevoir les dispositifs à ressort (36a, 36b, 50) des dispositifs d'amortissement (31, 32), agissant dans la direction périphérique.

4. Agencement de masses d'inertie selon la revendication 2 ou 3, caractérisé en ce que l'anneau cylindrique (30) présente, sur ses deux faces frontales, des butées (52a, 52b, 54a, 54b) pour des évidements (51, 53) formant les dispositifs à ressort (36a, 36b, 50).

5. Agencement de masses d'inertie selon une des revendications 2 à 4, caractérisé en ce que le talon d'anneau (38) axial de l'anneau cylindrique (30), s'engageant dans la fente axiale (37) de la première masse d'inertie (2), est maintenu par rapport à la première masse d'inertie (2), d'une façon constituant un dispositif à friction.

6. Agencement de masses d'inertie selon la revendication 5, caractérisé en ce que le talon d'anneau (38) axial présente au moins une surface de friction (39) venant s'appliquer en friction contre une contre-surface de la première masse d'inertie.

7. Agencement de masses d'inertie selon la revendication 6, caractérisé en ce que la surface de friction (39) présente des garnitures de friction au moins sur une partie de son pourtour.

8. Agencement de masses d'inertie selon la revendication 6, caractérisé en ce que la surface de friction (39) et la contre-surface associée présentent un couple d'ajustement constituant un ajustment à friction.

9. Agencement de masses d'inertie selon la revendication 6, caractérisé en ce que la surface de friction (39) présente des ondulations uniformément réparties sur le pourtour.

10. Agencement de masses d'inertie selon la revendication 2, caractérisé en ce que l'anneau cylindrique (30) présente une surface de friction conique (43) pouvant être pressée par un ressort à disques (45) précontraint, contre une contre-surface conique (44) reliée à la deuxième masse d'inertie (3).

11. Agencement de masses d'inertie selon la revendication 10, caractérisé en ce que la précontrainte du ressort à disques (45) est régable.

12. Agencement de masses d'inertie selon la revendication 10 ou 11, caractérisé en ce que les ressorts à disques (45) prennent appui sur un épaulement annulaire (46) d'une bague de retenue (47) fixée de manière réglable sur la deuxième masse d'inertie (3).

13. Agencement de masses d'inertie selon une des revendications 1 à 12, caractérisé en ce que la deuxième masse d'inertie (3) est montée sur un talon d'anneau (20) cylindrique de la première masse d'inertie (2), au moyen de deux roulements à billes à contact oblique (21a, 21b) serrés l'un contre l'autre par utilisation d'un ressort à disques (22).

14. Agencement de masses d'inertie selon la revendication 13, caractérisé en ce que les bagues extérieures des roulements à billes à contact oblique (21a, 21b) présentent des épaulements annulaires (24, 25) tournés l'un vers l'autre, entre lesquels est maintenu un bord annulaire (26), dirigé radialement vers l'intérieur, de la deuxième masse d'inertie (3).

15. Agencement de masses d'inertie selon la revendication 13 ou 14, caractérisé en ce que les bagues intérieures des roulements à billes à contact oblique (21a, 21b) sont serrées contre le ressort à disques (22) maintenu au fond du talon d'anneau (20), par une force supérieure à la force d'actionnement de l'embrayage à friction (6).

16. Agencement de masses d'inertie selon la revendication 15, caractérisé en ce que les bagues intérieures des roulements à billes à contact oblique (21a, 21b) sont serrées contre le ressort à disques (22) maintenu au fond du talon d'anneau (20), par une force telle qu'à l'état précontraint, le ressort à disque est dirigé à peu près radialement.

17. Agencement de masses d'inertie selon la revendication 13, caractérisé en ce que le ressort à disques est placé entre les bagues extérieures des roulements à billes à contact oblique et, à l'état monté, est pressé à peu près à hauteur du bloc.

18. Agencement de masses d'inertie selon une des revendications 1 à 17, caractérisé en ce que la première masse d'inertie est un volant (102) essentiellement constitué d'un moyeu (120), d'une jante (122) en forme de disque annulaire et de rayons (121) répartis sur le pourtour, reliant le moyeu à la jante.

19. Agencement de masses d'inertie selon la revendication 18, caractérisé en ce qu'au moins les arêtes des rayons (121) situées dans la direction périphérique sont en forme de pale.

20. Agencement de masses d'inertie selon la revendication 18 ou 19, caractérisé en ce qu'on dispose dans la zone comprise entre les rayons (121), des éléments de fixation (132a, 132b) en forme de lames, s'étendant à peu près radialement, dont les extrémités intérieures radialement sont maintenues dans la zone du moyeu (120) du volant (102) et dont les extrémités extérieures radialement sont des butées (135a, 135b) pour les dispositifs à ressorts (136, 137) disposés entre l'anneau cylindrique (104) et le volant (102).

21. Agencement de masses d'inertie selon une des revendications 18 à 20, caractérisé en ce les extrémités intérieures radialement des éléments de fixation (132a, 132b) sont maintenues dans des rainures radiales (133a, 133b) du moyeu du volant (120), et bloquées par des goupilles d'assemblage (134a, 134b).

22. Agencement de masses d'inertie selon la revendication 20 ou 21, caractérisé en ce que les éléments de fixation (132b) sont au moins en partie des éléments à ressorts destinés à agir axialement sur des éléments de friction (145) venant s'appliquer en friction contre la jante (122) du volant (102).

23. Agencement de masses d'inertie selon la revendication 22, caractérisé en ce que les éléments de friction (145) sont formés par des éléments constitutifs en forme de plaquettes, disposés entre le volant (102) et les éléments de fixation (132b), et maintenus dans des évidements (142) d'une âme radiale (106) de l'anneau cylindrique (104).

24. Agencement de masses d'inertie selon une des revendications 1 à 23, caractérisé en ce que la surface de friction conique (116) de l'anneau cylindrique (104) coopère avec une contre-surface (117) conique sur un anneau de friction (115) relié fixe en rotation à la deuxième masse d'inertie (103).

25. Agencement de masses d'inertie selon une des revendications 1 à 24, caractérisé en ce qu'on prévoit, pour la fixation réglable de la bague de retenue (108) sur la deuxième masse d'inertie (103), des écrous de serrage (111) s'engageant dans des évidements (110) de la bague de retenue (108) et pouvant être réglés par l'une des vis de serrage (113) maintenues sur la masse d'inertie.

26. Agencement de masses d'inertie selon une des revendications 1 à 25, caractérisé en ce que des vis de serrage de montage (126) sont fixées sur le pourtour extérieur du volant, pour que les ressorts à disques (107) reçoivent provisoirement de la pression pendant l'opération de montage.

27. Agencement de masses d'inertie selon une des revendications 1 à 26, caractérisé en ce qu'on prévoit sur les rayons (121) du volant (102), des trous taraudés (127) destinés à des vis de fixation (128), traversant des perçages d'aération (129) de la deuxième masse d'inertie (103) afin de former une unité de construction prémontée.

EP 0 270 980 B1

Fig.1

**EP 0 270 980 B1**

Fig.2

EP 0 270 980 B1

Fig.3

Fig.4

EP 0 270 980 B1